# EUROPÄISCHE PATENTSCHRIFT

(11) **EP 2 086 902 B1**
(45) Veröffentlichungstag und Bekanntmachung des Hinweises auf die Patenterteilung: **11.07.2018**
(21) Anmeldenummer: 07825394.5
(22) Anmeldetag: 17.10.2007
(51) Int. Cl.: C04B 7/24, C04B 7/44

(54) **VORRICHTUNG ZUM EINBRINGEN VON ABFALLSTOFFEN UND/ODER ALTERNATIVEN BRENNSTOFFEN IN EIN KLINKERHERSTELLUNGSVERFAHREN**
DEVICE FOR INTRODUCING WASTE AND/OR ALTERNATIVE FUELS INTO A CLINKER PRODUCTION METHOD
DISPOSITIF POUR INTRODUIRE DES DÉCHETS ET/OU DES COMBUSTIBLES DE REMPLACEMENT DANS UN PROCÉDÉ DE PRODUCTION DE CLINKER

(30) Priorität: 19.10.2006 AT 17572006
(43) Veröffentlichungstag der Anmeldung: 12.08.2009
(73) Patentinhaber: Holcim Technology Ltd., 8645 Jona (CH)
(72) Erfinder: FLACHER, Alexander, 5415 Rieden b. Baden (CH); VORAMWALD, Werner, 5013 Niedergösgen (CH)
(74) Vertreter: Keschmann, Marc
(86) Internationale Anmeldenummer: PCT/IB2007/003094
(87) Internationale Veröffentlichungsnummer: WO 2008/047213

(56) Entgegenhaltungen:
- DE-A1- 19 637 848
- JP-A- 2003 137 620
- US-A- 5 454 333
- US-A- 5 555 823

## Beschreibung

Die Erfindung bezieht sich auf eine Vorrichtung zum Einbringen von Abfallstoffen und/oder alternativen Brennstoffen in ein Klinkerherstellungsverfahren.

Die US 5555823 A beschreibt eine Vorrichtung, welche eine Fördereinrichtung zum Einbringen von Abfallstoffen in einen Drehrohrofen besitzt und das in das Klinkerherstellungsverfahren einzubringende Gemisch von Feststoffen und Schlämmen zerkleinert.

Abfallstoffe und alternative Brennstoffe fallen üblicherweise in unterschiedlichen Aggregatszuständen und unterschiedlichen Zusammensetzungen an. Beispielsweise ist es bekannt, Altreifen durch entsprechende Fördereinrichtungen an eine entsprechende Aufgabestelle an einem Drehrohrofen einer Klinkerherstellungsanlage zu fördern, wobei die entsprechenden Anlagenteile den Dimensionen von Altreifen sowie den jeweils sinnvoller Weise zuzuführenden Massen derartiger Altstoffe angepasst sein müssen. Unterschiedliche Feststoffe, welche zumeist in unterschiedlichen Formgebungen vorliegen, erfordern entweder eine speziell an die Formgebung angepasste Förder- und Zufuhreinrichtung oder aber eine entsprechende Zerkleinerung des Materials als Schüttgut an einer entsprechenden Aufgabestelle. Im Fall von mechanisch zerkleinerten Feststoffen schwankt allerdings die chemische Zusammensetzung des zerkleinerten Rohmaterials relativ stark in Abhängigkeit von unter-schiedlichen Abfallstoffen bzw. unterschiedlichen alternativen Brennstoffmaterialien.

Eine Vereinheitlichung der entsprechenden Förder- und Zuführeinrichtungen lässt sich prinzipiell dadurch erzielen, dass die Ausgangsmaterialien in eine einheitliche Form bzw. einen einheitlichen Aggregatszustand gebracht werden. Prinzipiell können beispielsweise alternative Brennstoffe in gesonderten Reaktoren verbrannt oder vergast werden, sodass in der Folge die gewünschte Energie in Form von gasförmigen Stoffen zur Verfügung steht, welche an geeigneter Stelle in das Klinkerherstellungsverfahren eingebracht werden können. Flüssig anfallende Abfallstoffe können in geeigneter Weise über Düsen eingedüst werden. Der überwiegend größere Teil von Abfallstoffen ist aber in aller Regel nicht unmittelbar in der Klinkerherstellung einsetzbar, wenn nicht zuvor aufwändige Vorbehandlungen vorgenommen werden.

Die Erfindung zielt nun darauf ab, eine Vorrichtung der eingangs genannten Art zu schaffen, mit welcher die Möglichkeit geboten wird, eine große Zahl verschiedener Ausgangsmaterialien an verschiedenen Stellen in ein Klinkerherstellungsverfahren einzuschleusen. Zu diesem Zweck weist die erfindungsgemäße Vorrichtung ein rohrförmiges Gehäuse auf mit einem zur Rohrachse im Wesentlichen konzentrisch rotierbar gelagerten und zur Rotation antreibbaren Rotor mit den Raum zwischen der Rotorwelle und der Gehäusewand überstreichenden Flügeln, wobei an den Mantel des rohrförmigen Gehäuses eine Mehrzahl von Leitungen bzw. Öffnungen anschließt, wobei wenigstens eine Leitung mit der Schlammzufuhr und wenigstens eine Austragsöffnung in Umfangsrichtung versetzt angeordnet sind und ist erfindungsgemäß dadurch gekennzeichnet, dass eine tangential an den Ringraum anschließende Öffnung fluchtend mit der Austragsöffnung insbesondere einem Austragskonus für die zerkleinerte und homogenisierte pumpfähige Masse angeordnet ist und die Flügel von radial gerichteten, achsparallel verlaufenden Platten gebildet sind. Derartige achsparallel verlaufende Platten wirken als Schlagleisten. Da diese Platten sich auf relativ großem Durchmesser befinden können, kann bei geringer Umdrehungszahl eine hohe Relativgeschwindigkeit zwischen rotierenden Platten und dem einzustoßenden Material erzielt werden, wodurch beim Aufprall dieser Schlagleisten auf das Material eine entsprechende mechanische Desagglomerierung erfolgt und gleichzeitig das Material in die vorgesehene Aufgabeöffnung eingestoßen werden kann.

Mit der erfindungsgemäßen Vorrichtung kann ein Verfahren durchgeführt werden, bei dem die Rohstoffe als Schlämme oder in aufgeschlämmter Form als pumpfähige Masse einer mechanischen Zerkleinerung unterworfen werden und die pumpfähige Masse in Steigleitungen, Vorkalzinierer und/oder den Drehrohrofen ausgestoßen wird. Dadurch, dass die Rohstoffe als Schlämme oder in aufgeschlämmter Form eingesetzt werden, lässt sich mit geringem Aufwand eine pumpfähige Masse bilden, welche über entsprechende Leitungssysteme transportiert werden kann. Eine derartige pumpfähige Masse, welche lediglich den Mindestanforderungen für die Pumpfähigkeit entsprechen muss, enthält aber in aller Regel je nach Zusammensetzung der Ausgangsprodukte bzw. der Abfallstoffe mehr oder minder große Feststoffanteile, welche nach Ausbildung des Schlammes oder in aufgeschlämmter Form als pumpfähige Masse ohne weiteres transportiert werden können. Die Feststoffe können aber je nach chemischer zusammensetzung in der Folge auch in einem Drehrohrofen nicht mit Sicherheit vollständig umgesetzt werden und würden in der Folge die Homogenität und die Zusammensetzung des Endprodukts empfindlich beeinträchtigen. Bei Verwendung einer pumpfähigen Masse kann eine mechanische Zerkleinerung vorgenommen werden, welche mit einer derartigen pumpfähigen Masse mit besonders einfach bauenden Einrichtungen erzielt werden kann. Eine derartige mechanische Zerkleinerung kann mit entsprechenden Fördereinrichtungen oder Einstoßvorrichtungen unmittelbar erzielt werden, sodass das Verfahren sich ohne nennenswerte Modifikationen für den Einsatz unterschiedlicher alternativer Brennstoffe und unterschiedlicher Abfallstoffe eignet. Mit Vorteil wird das Verfahren hierbei so durchgeführt, dass die Rohstoffe auf eine maximale Teilchengröße von 100 mm, vorzugsweise maximal 80 mm, vorzerkleinert werden, bevor sie aufgeschlämmt und der weiteren Zerkleinerung unterworfen werden. Durch die Beschränkung des Feststoffanteils auf eine maximale Teilchengröße von 100 bis 80 mm wird die Pumpfähigkeit ohne weiteres noch sichergestellt, wobei eine derartige Teilchengröße die Möglichkeit bietet, die endgültige Desagglomerierung im Bereich der Aufgabestelle durch eine entsprechende Ausstoß- bzw. Einbringvorrichtung sicherzustellen. Hierbei wird mit Vorteil so vorgegangen, dass feste Abfallstoffe mit Abfallschlämmen gemeinsam einer Zerkleinerung und Homogenisierung unterworfen werden.

Es gelangen somit einfach bauende und nur gering wartungsanfällige Einrichtungen zum Einsatz, wobei durch den zur Rotation antreibbaren Rotor mit den den Freiraum überstreichenden Flügeln bei entsprechender Rotationsgeschwindigkeit die gewünschte zerkleinerung gleichzeitig mit dem gewünschten Einstoß in die jeweils vorgesehene Anschlussstelle im Klinkerherstellungsverfahren gewährleistet ist. Die Mehrzahl von an einen Mantel einer derartigen Einrichtung angeschlossenen Leitungen oder Öffnungen kann dabei für unterschiedliche zusätzliche Zwecke genutzt werden. Bei entsprechend hoher Rotationsgeschwindigkeit kann eine übermäßige Erhitzung des Gehäuses durch Einbringen von Kühlluft in den vom Rotor überstrichenen Freiraum vermieden werden. Ebenso kann Flüssigkeit zu Reinigungszwecken eingestoßen werden.

Mit Vorteil ist die Ausbildung hierbei so getroffen, dass das Gehäuse zusätzliche in den Ringraum mündende Öffnungen für den Eintrag von weiteren flüssigen oder gasförmigen Medien aufweist. Diese weiteren Öffnungen können hierbei aber auch als Inspektionsöffnungen für Reinigungszwecke ausgebildet sein, wobei eine besonders einfache Reinigung der mechanischen Zerkleinerungsvorrichtung dadurch gewährleistet werden kann, dass eine im wesentlichen tangential an den Ringraum anschließende Öffnung im wesentlichen fluchtend mit der Austragsöffnung insbesondere einen Austragskonus für die zerkleinerte und homogenisierte pumpfähige Masse aufweist.

Um den Einstoß des zerkleinerten Materials zu unterbrechen, kann bei rotierendem Rotor so vorgegangen werden, dass die Austragsöffnung verschlossen wird, wobei die Ausführung mit Vorteil hierzu so getroffen ist, dass die Austragsöffnung für die pumpfähige Masse ein Schließglied, insbesondere einen Schließschieber, aufweist. Um eine besonders einfache und entsprechend stabile Festlegung der erfindungsgemäßen Vorrichtung beispielsweise im Bereich des kalten Endes eines Drehrohrofens zu ermöglichen, ist die Ausbildung mit Vorteil so getroffen, dass die Vorrichtung im Bereich der Austragsöffnung einen Befestigungsflansch für die Festlegung an eine Eintragsöffnung in die Anlage zur Klinkerherstellung aufweist.

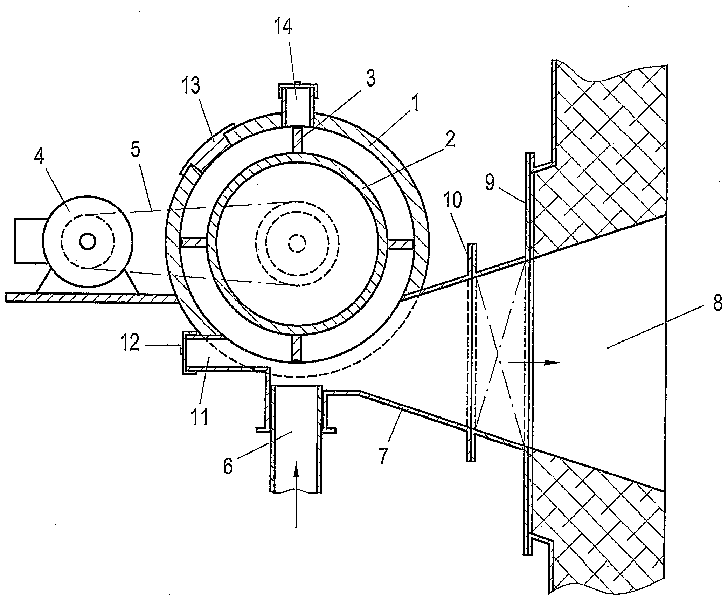

Die Erfindung wird nachfolgend anhand eines in der Zeichnung schematisch dargestellten Ausführungsbeispieles näher erläutert. In der Zeichnung ist mit 1 das Gehäuse der Zerkleinerungseinrichtung bezeichnet. Im Inneren und koaxial zu diesem rohrförmigen Gehäuse 1 ist ein Rotor 2 mit Flügeln 3 angeordnet, wobei die Flügel als im Wesentlichen achsparallele Leisten ausgebildet sind. Der Antriebsmotor ist schematisch mit 4 bezeichnet und kann über mit 5 angedeutete Antriebsriemen den Rotor 2 zu entsprechend hoher Umdrehungszahl antreiben, wodurch die Flügel 3 im Bereich der Zufuhr von zu zerkleinerndem Material mit hoher Geschwindigkeit auf dieses Material auftreffen. Die Zuführung erfolgt über den Anschluss bzw. Leitung 6, über welchen pumpfähige Masse eingetragen wird, deren Feststoffanteil durch die rotierenden Flügel bzw. Leisten 3 beim Auftreffen auf Feststoffe zerkleinert wird. Der Austrag erfolgt über einen Austragkonus 7 an das kalte Ende 8 eines Drehrohrofens, wobei die Festlegung über einen Flansch 9 in besonders einfacher und stabiler weise erfolgen kann. Mit 10 ist ein Schieber bezeichnet, über welchen die Austragsöffnung verschlossen werden kann. Im Wesentlichen koaxial zu dem Austragskonus ist eine Putzöffnung 11 tangential an das Gehäuse 1 angeschlossen, deren Deckel mit 12 bezeichnet ist. Mit 13 ist ein Deckel für eine Inspektionsöffnung bezeichnet. Über den Anschluss 14 kann beispielsweise zusätzliche Kühlluft dem Rotor zugeführt werden, um Überhitzungen zu vermeiden. Über die Putzöffnung 11 kann naturgemäß nach Abnahme des Deckels gleichfalls Luft, Gas oder Flüssigkeit eingestoßen werden, welche gemeinsam mit dem über den Anschluss 6 zugeführten pumpfähigen Schlamm in den Konus 7 und damit in den Drehrohrofen ausgestoßen werden kann.

## Patentansprüche

1. Vorrichtung zum Einbringen von Abfallstoffen und/oder alternativen Brennstoffen in ein Klinkerherstellungsverfahren, umfassend ein rohrförmiges Gehäuse (1) mit einem zur Rohrachse im Wesentlichen konzentrisch rotierbar gelagerten und zur Rotation antreibbaren Rotor (2) mit den Raum zwischen der Rotorwelle und der Gehäusewand überstreichenden Flügeln (3), wobei an den Mantel des rohrförmigen Gehäuses (1) eine Mehrzahl von Leitungen bzw. Öffnungen anschließt, wobei wenigstens eine Leitung (6) mit der Schlammzufuhr und wenigstens eine Austragsöffnung in Umfangsrichtung versetzt angeordnet sind, **dadurch gekennzeichnet, dass** eine tangential an den Ringraum anschließende Öffnung fluchtend mit der Austragsöffnung insbesondere einem Austragskonus (7) für die zerkleinerte und homogenisierte pumpfähige Masse angeordnet ist und die Flügel (3) von radial gerichteten, achsparallel verlaufenden Platten gebildet sind.

2. Vorrichtung nach Anspruch 1, **dadurch gekennzeichnet, dass** das Gehäuse (1) zusätzliche in den Ringraum mündende Öffnungen (11, 14) für den Eintrag von Reinigungsflüssigkeiten oder gasförmigen Medien aufweist.

3. Vorrichtung nach Anspruch 1 oder 2, **dadurch gekennzeichnet, dass** die Austragsöffnung für die pumpfähige Masse ein Schließglied, insbesondere einen Schließschieber (10), aufweist.

4. Vorrichtung nach Anspruch 1, 2 oder 3, **dadurch gekennzeichnet, dass** die Vorrichtung im Bereich der Austragsöffnung einen Befestigungsflansch (9) für die Festlegung an eine Eintragsöffnung in die Anlage zur Klinkerherstellung aufweist.

## Claims

1. A device for introducing waste substances and/or alternative fuels into a clinker production process, comprising a tubular housing (1) including a rotor (2) mounted to be rotational substantially concentrically with the tube axis and driveable for rotation with blades (3) sweeping over the space between the rotor shaft and the housing wall, wherein a plurality of ducts and openings are connected to the shell of the tubular housing (1), and at least one duct (6) is arranged with the slurry supply and at least one duct is offset in the peripheral direction, **characterized in that** an opening substantially tangentially connected to the annular space, in particular, comprises a discharge cone (7) for the disintegrated and homogenzied pumpable mass substantially in alignment with the discharge opening and the blades (3) are comprised of radially oriented, axially-parallelly extending plates.

2. A device according to claim 1, **characterized in that** the housing (1) comprises additional openings (11, 14) running into the annular space for charging cleaning fluids or gaseous media.

3. A device according to claim 1 or 2, **characterized in that** discharge opening for the pumpable mass comprises a closing member, in particular a closing slide (10).

4. A device according to claim 1, 2 or 3, **characterized in that** the device, in the region of the discharge opening, comprises a fixing flange (9) for fixation to an inlet opening running into the clinker production plant.

## Revendications

1. Dispositif pour introduire des déchets et/ou des combustibles de remplacement dans un procédé de production de clinker, comprenant un carter tubulaire (1) avec un rotor (2) logé de façon rotative de manière sensiblement concentrique à l'axe du tube et pouvant être entraîné en rotation avec des ailettes (3) couvrant l'espace entre l'arbre du rotor et la paroi du carter, dans lequel une pluralité de conduites ou ouvertures se raccorde à l'enveloppe du carter tubulaire (1), dans lequel au moins une conduite (6) avec l'arrivée de boue et au moins une ouverture d'évacuation sont agencées de manière décalée dans le sens périphérique, **caractérisé en ce qu'**une ouverture se raccordant tangentiellement à l'espace annulaire est alignée avec l'ouverture d'évacuation en particulier un cône d'évacuation (7) pour la masse pompable homogénéisée et broyée et les ailettes (3) sont formées de plaques s'étendant parallèlement à l'axe, orientées radialement.

2. Dispositif selon la revendication 1, **caractérisé en ce que** le carter (1) présente des ouvertures (11, 14) supplémentaires débouchant dans l'espace annulaire pour l'alimentation de fluides de nettoyage ou agents gazeux.

3. Dispositif selon la revendication 1 ou 2, **caractérisé en ce que** l'ouverture d'évacuation pour la masse pompable présente un organe de fermeture, en particulier un coulisseau de fermeture (10).

4. Dispositif selon la revendication 1, 2 ou 3, **caractérisé en ce que** le dispositif présente dans la zone de l'ouverture d'évacuation une bride de fixation (9) pour la fixation à une ouverture d'alimentation dans l'installation de production de clinker.
